# EUROPEAN PATENT APPLICATION

(11) **EP 3 012 776 A1**
(43) Date of publication of application: **27.04.2016**
(21) Application number: 14306680.1
(22) Date of filing: 22.10.2014
(51) Int. Cl.: G06K 9/00, G06F 17/30, G06Q 30/00

(54) **Method and apparatus for performing story analysis**

(71) Applicant: Thomson Licensing, 92130 Issy-les-Moulineaux (FR)
(72) Inventor: Maetz, Yves, 35576 Cesson-Sévigné (FR); Lambert, Anne, 35576 Cesson-Sévigné (FR); Eluard, Marc, 35576 Cesson-Sévigné (FR)
(74) Representative: Huchet, Anne

(57) **Abstract**

A method and apparatus for performing story analysis are described including accepting a story, detecting characters for each scene in the story, analyzing a relationship of each set of characters in the each scene of the story, determining an importance of each character in the each scene of the story and determining an interaction characterization for the each character in the each scene of the story using the importance of the each character.

## Description

### FIELD OF THE INVENTION

The present invention relates to story analysis and story creation tools.

### BACKGROUND OF THE INVENTION

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

An objective of screenwriting tools is to help writers generate a script, which is a document (generally around 150 pages) that details the actions and dialogs of the different characters in each scene. The writer has to define the main concepts of the story (locations, characters) as well as the interactions between them. It is a lengthy creative task that requires many iterations. The use of these tools undoubtedly helps the writers in this difficult task. The screenwriting tools that are currently available are, however, lacking interesting features such as a synthetic visualization of the relationship between characters. In most screenwriting tools, the writer is limited to a simple list of the characters present in a scene. In the best case, there is a page to define some characteristics for each character (such as appearance, attitude, psychology, etc.).

When character relationships are discussed, it must be understood within the concept of a network. Analysis and visualization are designed to find and show relationships among people in one or more networks. This might be done in order to detect leaders and influential figures. One of the best examples is the "Movie Galaxies" tool (http://moviegalaxies.com/). The "Movie Galaxies" tool used an already written script. The "Movie Galaxies" parsing algorithm identifies which characters are present in which scenes, which characters are engaged in conversation together, and how often they communicate.

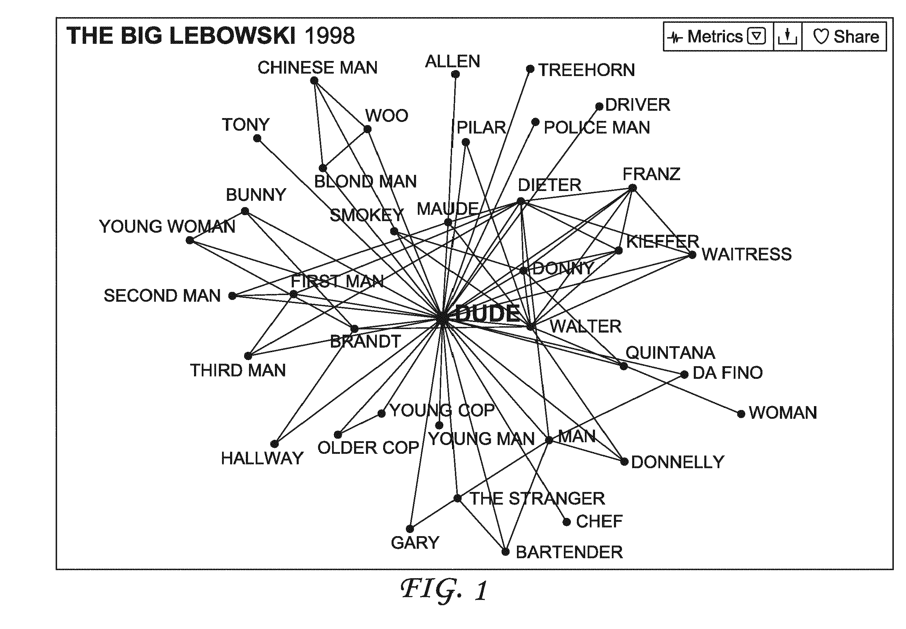

Fig. 1 show the character connectivity of the 1998 movie "The Big Lebowski" using the "Movie Galaxies" tool. In this tool, the connectivity is based on the dialogs between the characters, but never on the "emotional" relationships (love, hate, etc.).

It would be advantageous to compute and display the relationship between different characters of a screenplay, being able to differentiate strong relationship and anecdotic relationships. Such a feature could be an interesting addition to provide some help and guidance to the story writer.

### SUMMARY OF THE INVENTION

The proposed method and apparatus relates to the creation step of any story, resulting into a movie screenplay (a.k.a movie script), a book, a theater play, a game scenario or any other forms of story. As used herein the term "story" includes but is not limited to books, plays, movies, scripts and games and these terms may all be used interchangeably herein. The proposed method and apparatus applies to screenwriting tools that are used by writers to define and refine the story. In this domain, paper has largely been replaced by digital files, which makes the reworking of the different elements of the story easier. The proposed method also allows for better sharing among creators and communication of the result.

A method and apparatus for performing story analysis are described including accepting a story, detecting characters for each scene in the story, analyzing a relationship of each set of characters in the each scene of the story, determining an importance of each character in the each scene of the story and determining an interaction characterization for the each character in the each scene of the story using the importance of the each character.

### BRIEF DESCRIPTION OF THE DRAWINGS

The present invention is best understood from the following detailed description when read in conjunction with the accompanying drawings. The drawings include the following figures briefly described below:
Fig. 1 show the graph resulting by applying the "Movie Galaxies" tool to the 1998 movie "The Big Lebowski".
Fig. 2 is an architecture overview of the present invention.
Fig. 3 is a simple representation of the character relationship analysis.
Fig. 4 is a more elaborate representation of the character relationship analysis.
Fig. 5 shows three examples of character relationships in three scenes.
Fig. 6 shows a global view of the evolution of the relationship between two characters over the course of the story.
Fig. 7 shows global evolution of a particular character though the story.
Fig. 8 is an example of a scene from a story that is analyzed by the proposed method and apparatus.
Fig. 9 is an example of the script of a scene from a story that is analyzed by the proposed method and apparatus.
Fig. 10 is a flowchart of an exemplary embodiment of the proposed method of character analysis for story creation.
Fig. 11 is a flowchart of an exemplary embodiment of the story analysis portion of the proposed story creation method.
Fig. 12 is a block diagram of an exemplary embodiment of the proposed apparatus of character analysis for story creation.

It should be understood that the drawing(s) are for purposes of illustrating the concepts of the disclosure and is not necessarily the only possible configuration for illustrating the disclosure.

### DETAILED DESCRIPTION OF THE PREFERRED EMBODIMENTS

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The proposed method and apparatus analyze the different elements that make up (comprise) the story, for example by analyzing the movie script scene by scene. As used herein, the term "scene" refers to a part or portion of a book or a play or article to be published. In the case of an article there may be section of the article. In the case of a book, there are chapters. That is, the term "scene" is not limited to a script, for example of a movie or play but rather is to be construed liberally to include any part or portion of a creative work, including but not limited to, scenes, sections or chapters. Actions, descriptions and dialogs all constitute sources of interactions between the characters. From these it is possible to extract and define their relationship as well as positive or negative opinions (sentiments) of the characters and/or the interactions between characters.

This is done for each scene and leads to a character relationship table that contains, for each scene:
- The individual presence of the characters
- An indication of the quantity of interactions between characters
- A sentiment (positive/negative) characterization of the interactions between characters

This character relationship table as well as the interaction characterization described below can then be either displayed on a screen or exported to a file for further use.

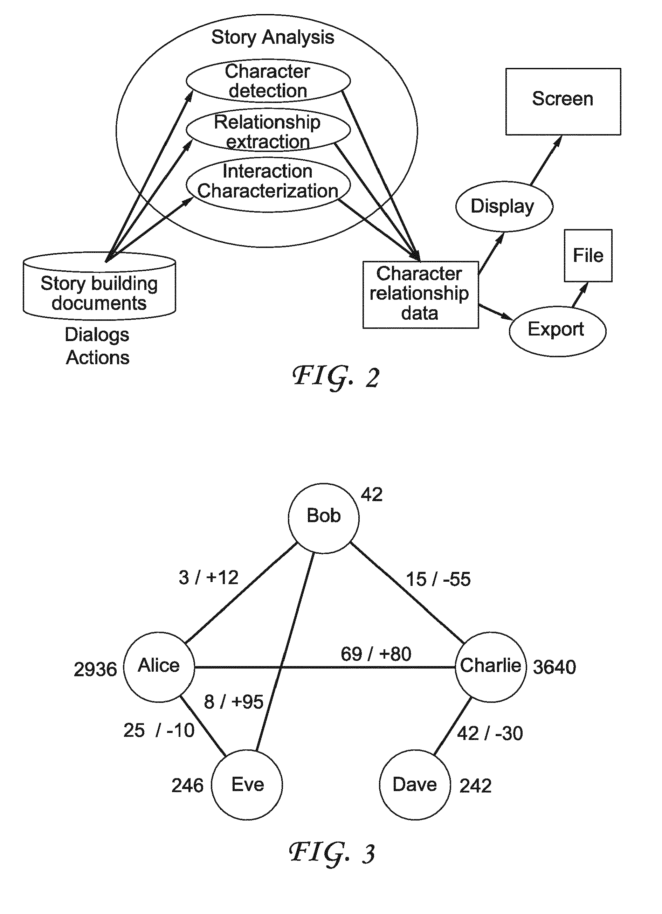

Fig. 2 is an architecture overview of the present invention. The story analysis is performed in a processor which is under control of instructions in a tangible non-transitory computer readable medium having code to direct the processor. The processor accesses the story building documents which are stored in a data base. A data base includes any form of memory including disks, CDs, DVDs, tape, optical memory, flash drives, any form of RAM memory, hard drives, cloud memory or any other storage medium or device. The story building documents include dialog interactions of the characters. The story analysis detects the various characters (character detection). Users may provide additional input. Please note that a user-assisted grouping step of character names could be required. Indeed, character names sometimes take different forms. For example in "the Big Lebowski" movie, the protagonist is identified as "LEBOWSKI" or "THE DUDE" in the script. Another character is called "JEFFREY LEBOWSKI" or "MR LEBOWSKI". Without any further action, those four character names would be considered as four different characters. Therefore a dedicated user interface could advantageously be used to allow grouping character names together into a single character. A simple automatic grouping would probably combine these four names erroneously. To that end, a user is able to provide equivalence among different names for the same character. After character detection the story analysis proceeds to perform relationship extraction between every set of characters throughout the story. Story analysis then determines interaction characterizations for every character. The generated character relationship data is stored back in the data base and also available for display on a display device. A display device is any device which has a screen for viewing and includes but is not limited to plasma and LCD displays and may also include dual mode smart phones, tablets, notebook computers, laptop computers etc. If the character relationship file is exported then the exported file may be used in further story creation efforts and/or viewed on another display device remote from the processor that analyzed the data and created the character relationship file.

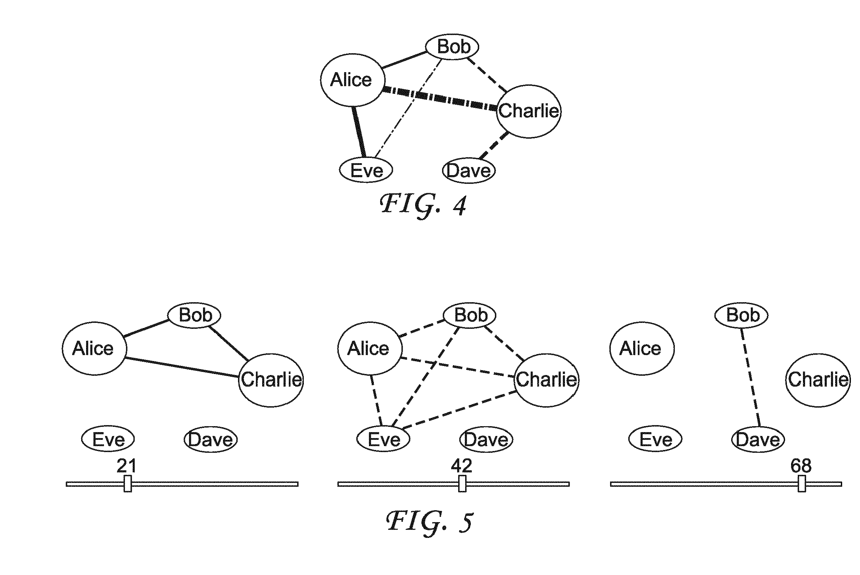

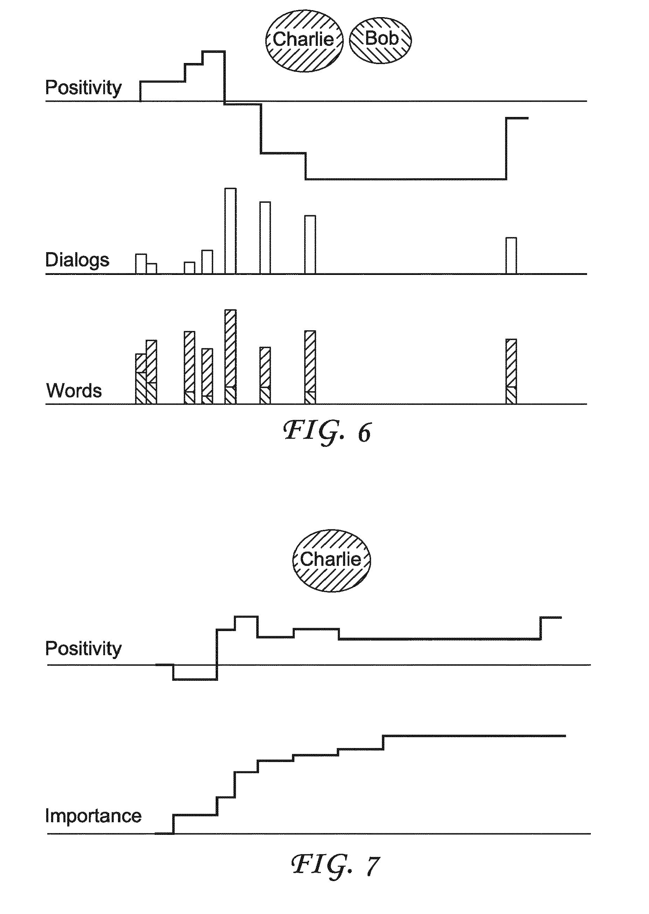

Any or all of the character relationship data can be displayed. The different types of character relationship data that can be displayed are:
- Global relationship between all characters, done by averaging the elements of the tables on the complete story. In Figs. 3 and 4:
   o The circle identifies the characters, corresponding value gives the importance of the character in the story, for example indicating the number of words in their dialogs,
   o The lines identify a relationship between two characters, corresponding values give, first, the quantity (intensity) of relationship and, second, the relation sentiment. Intensity is given with a value, for example indicating the number of interactions. Sentiment is given with a value between -100 (most negative sentiment) and +100 (most positive sentiment) measured using sentiment analysis on the dialogs between those characters. Note that on Fig. 3, for example, that there is no line between Eve and Dave, which indicates that there is no relationship between Eve and Dave.
   ∘ This basic representation shown in Fig. 3 is not very efficient or pleasing regarding visual perception. Fig. 4 is a more pleasing representation of the character relationship analysis. Fig. 4 helps the story writer easily understand and visualize the relationship between characters by visualizing all the previous elements graphically. The size of the circles is proportional to the importance of the character (Charlie is more important than Dave), the size of the lines identify the quantity (intensity) of the relationship between two characters (the thicker the line, the more interactions between two characters). The color of the lines indicates how positive or negative the relationship between the characters is (red = negative, green = positive, black = neutral). On Fig. 4 a red line is indicated by a dashed line; a black line is indicated by a solid line; and a green line is indicated by a line that is dashed and dotted. However, the different numbers may still be displayed on request, for example by selecting one character. Shadings (dots, lines, cross-hatching) of the circles may be used instead of colors. Shadings may be appropriate and specified in user preference profiles or configurations if, for example, a user is color blind.
- Scene-by-scene relationship between characters present in the scene. This is illustrated in the Fig. 5 where the slider fixes a scene number, and the relationship line and number indicate the relationship for the selected scene. In scene 21 (leftmost graph of Fig. 5) for example, Dave and Eve are not present therefore no relationship is possible. As shown in scene 42 (middle graph of Fig. 5), Dave is not present but Eve, Alice, Charlie and Bob are present. As can be seen each character interacts with each other character present in the scene. That is, Alice interacts (has dialog with) Charlie, Bob and Eve. Charlie has interaction with Bob, Alice and Eve. Bob has interaction with Charlie, Alice, and Eve. Eve has interaction with Charlie, Alice and Bob. In scene 68 (rightmost graph of Fig. 5), only Dave and Bob are present in the scene and therefore, only Bob and Dave interact with each other.
- Character-to-character relationship evolution for the complete movie. The same kind of representation as was presented above can be used. For example, by selecting the scene 14, the relations between characters present during the first 14 scenes can be represented on the diagram. To have a global view of the evolution between two characters a new form of representation is adopted. In Fig. 6 the line represents the accumulation of the sentiment (positivity, negativity) value characterizing the evolution of the relationship. Above the sentiment line, positive sentiment or positivity is indicated. Below the sentiment line negative sentiment or negativity is indicated. As shown in Fig. 6, the relationship between Charlie and Dave is positive in the beginning, very negative in the middle and improving again at the end of the story. The histogram bars indicates the number of dialogs Bob and Charlie had together while the hatched bars shows the amount of words in the dialogs of Bob and Charlie. This temporal visualization allows an understanding very quickly that Bob and Charlie had some very interactive and lengthy discussion in the first half of the script. Once again, shadings or hatchings could be used as an alternative to colors.
- Individual relationship evolution. In this case, as shown in Fig. 7 the story writer can follow the global evolution of a particular character though the story. The first line gives the evolution of the relation with the other characters (by averaging the relationship with all other characters) and the second line shows the evolution of the presence / importance of this character.

The proposed method and apparatus analyzes the different elements that compose the story. In the context of a movie script, the following type of textual data can be extracted for each scene:
- Action: used to define the location and the mood of the scene, to describe the actions happening in a scene as well as the interactions between the characters involved (e.g.: physical interactions).
- Dialogs: used to define what the characters are saying to others characters (e.g.: verbal interactions). They often contain other indications to discern the tone of the speaker (e.g.: laughs, screams...).

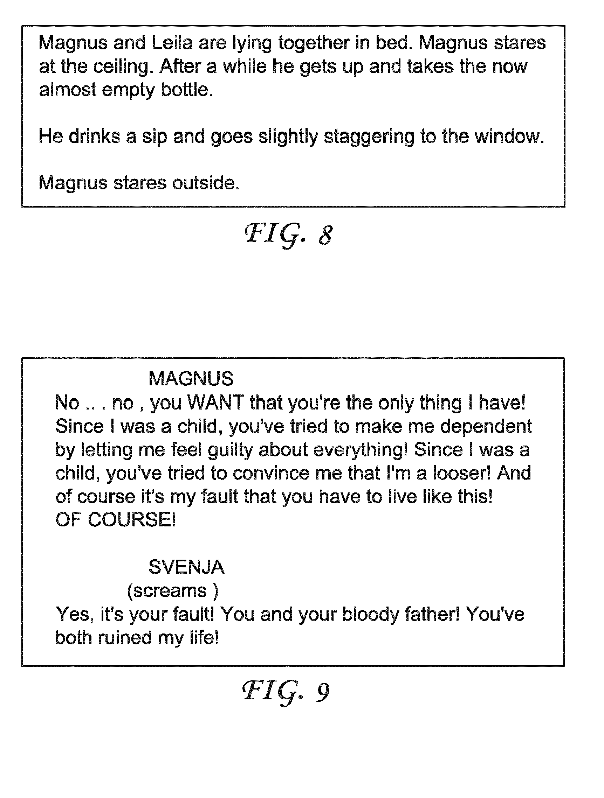

Fig. 8 is an example of a scene from a story that is analyzed by the proposed method and apparatus. Fig. 8 has no dialog per se but directs the actions of the characters. Fig. 9 is an example of the script of a scene from a story that is analyzed by the proposed method and apparatus.

The analysis is done in several steps, for each scene. First of all, the text is segmented in tokens (words, punctuation), then the unnecessary words are filtered out (for example by keeping only specific part-of-speech such as noun, verb or adjectives), the filtered tokens are then normalized either by lemmatization or by stemming.. Applied to the last dialog element in Fig. 9, the extraction would lead to the Table 1. The extracted proper nouns are added to the list of characters of the movie.

In a first embodiment, the elements of the table are compared with a dictionary that indicates if a term is positive or negative. A dictionary may be included with the story analysis tool and may be augmented by a user. Certain words (terms) may be positive or negative so it may be necessary to consider the context in which some terms (words) are used. For example, in the example shown in Table 1, the word "screamed" is used and is negative in the context since the word "ruined" is used in the same dialog. However, in "Mary screamed 'Happy Birthday"', the term "screamed" would be positive. This value is reported in the last column of the table. The scores are added up and a global level of sentiment (positivity, negativity) is computed for the scene. As a result, this extraction results in a score of "-3" and is considered generally negative.

**Table 1 Example of positivity table**

| | | |
|---|---|---|
| Svenja | Proper noun | 0 |
| Scream | Verb | -1 |
| Fault | Noun | -1 |
| Bloody | Adjective | -1 |
| Father | Noun | 0 |
| Have | Verb | 0 |
| Ruin | Verb | -1 |
| Life | noun | +1 |

In addition to that, it is also recorded that "Svenja", "Magnus" and "Leila" are present in the scene, although "Leila" has no dialog. The quantity of interaction is measured for example by counting the number of dialogs or the length of the dialogs (number of words).

Data are computed for all the scenes and the following relationship table is completed.

**Table 2 Relationship table**

| | | Magnus | | | Leila | | | Svenja | | | ... |
|---|---|---|---|---|---|---|---|---|---|---|---|
| Scene | Sentiment | P | # | Size | P | # | Size | P | # | Size | ... |
| ... | | | | | | | | | | | ... |
| 21 | -12 | X | 5 | 252 | X | 5 | 325 | X | 0 | 0 | ... |
| 22 | -3 | | | | X | 2 | 32 | X | 2 | 15 | ... |
| 23 | +42 | X | 15 | 96 | | | | X | 15 | 123 | ... |
| ... | | | | | | | | | | | ... |

In the table above "P" indicates the presence of a character in a scene. "#" indicates the number of interactions or dialogs in which the character engaged in the scene. And "Size" indicates the importance or number of words in the dialog for the character. This relationship table is then interpreted to generate the figures described above.

In an alternate embodiment, the sentiment (positivity or negativity) of dialogs and description are evaluated separately, allowing characterization independently of the context of the scene (description part) and the character interactions (dialogs).

To aid in the analysis, it is also possible to use additional data produced during the story elaboration.

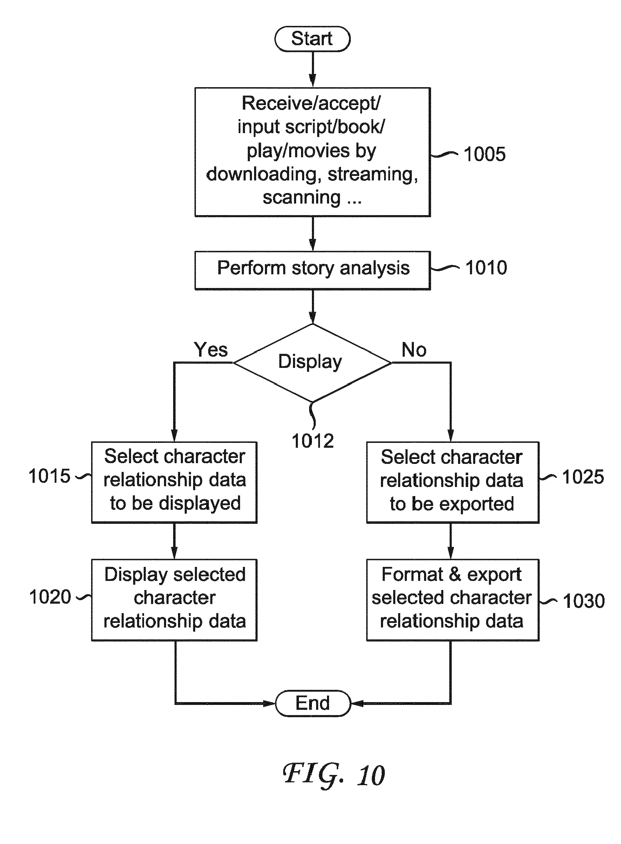

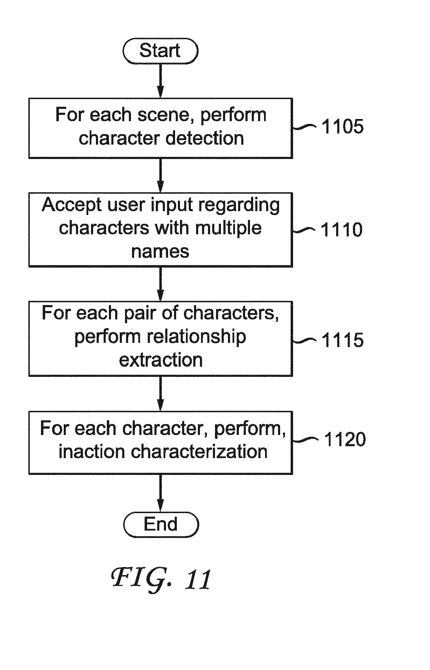

Fig. 10 is a flowchart of an exemplary embodiment of the proposed method of character analysis for story creation. At 1005 the story is received (accepted, input) by any means available including but not limited to downloading, streaming, scanning, etc. depending on the format of the source. At 1010 story analysis is performed. Story analysis will be described and discussed below in connection with Fig. 11 and was described above. At 1012 a test is performed to determine if the resulting character relationship data (files) are to be displayed. The phrase "character relationship data" as used herein includes the original story material and the data generated by the story analysis process of the proposed method, e.g., the list of detected characters, the character relationship for each set of characters, and the interaction characterization for each character, the graphs for each character relationship for each scene in the story and the interaction characterization graphs for each character. It is assumed that if the character relationship data (files) are not to be displayed then the character relationship data (files) are to be exported for use elsewhere or in further applications. If the resulting character relationship data (files) are to be displayed then at 1015 the character relationship data (files) to be displayed are selected. At 1020 the selected character relationship data (files) are displayed. If the resulting character relationship data (files) are not to be displayed then at 1025 the character relationship data (files) to be exported are selected. At 1030 the selected character relationship data (files) are formatted and exported.

Fig. 11 is a flowchart of an exemplary embodiment of the story analysis portion of the proposed story creation method. At 1105 for each scene of the story, character detection is performed. Character detection is a process by which all characters are identified by reviewing the story. The result is a list of all characters detected in the story. Character detection is accomplished, for example, by parsing the script using the well-known formatting rules used in script editing, resulting in a list of characters. At 1110, user input is accepted to resolve multiple names for the same character. As described above, this is called grouping. At 1115 for each set of characters, relationship extraction is performed. In this phase of story analysis the relationships between characters are determined in terms of sentiment (positivity or negativity) as well as the number of dialogs and number of words spoken in each scene. The dialog of each character is parsed, tagged and filtered as described above. This results in a table, such as Table 1, or graphs such as Fig. 3 and/or Fig. 4. The number of words of dialog may be either the total number of words of dialog or the number of words of dialog after filtering out of unnecessary words such as articles or prepositions. At 1120 for each set of characters, interaction characterization is performed. In this phase of story analysis each the interaction of each character is determined (characterized) based on the sentiment (positivity or negativity) of the information related to a character (actions, dialogs, etc.) over the course of the story as well as the importance of the character over the course of the story. As described above, this results in a table or graph. All data of the story analysis phase is first generated in a tabular form and then graphs are generated from the tabular data.

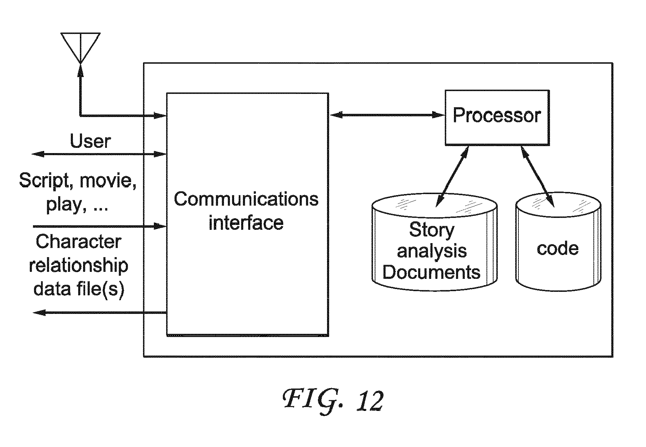

Fig. 12 is a block diagram of an exemplary embodiment of the proposed apparatus of character analysis for story creation. The proposed story creation and analysis apparatus includes a communications interface. The communications interface is in bi-directional communication with the processor and interfaces with the user. The communications interface can handle wired line or wireless communications. The communications interface accepts (receives) the story to be analyzed. The input may be by downloading, streaming or scanning depending on the format of the source. The interface with the user is via any display device and any device having a keyboard and/or graphical user interface. The character relationship data (files) can be exported via the communications interface. The received story, received via the communications interface, is forwarded to the processor, which stores the received content in a data base and performs story analysis as described above and stores the resulting character relationship data (files) in a data base of a storage system shown as "Story analysis documents". Code to direct the processor is stored in the storage system. The code to direct the processor may be in a single story analysis module or separate modules for character detection, relationship extraction and interaction characterization. There may also be a separate module for generation of the graphs from the tabular data. The storage system may include any type of memory including disks, optical disks, tapes, hard drives, CDs, DVDs, flash drives, cloud memory, core memory, any form of RAM or any equivalent type of memory or storage device. The code similarly may include any type of memory including disks, optical disks, tapes, hard drives, CDs, DVDs, flash drives, cloud memory, core memory, any form of RAM or any equivalent type of memory or storage device. The code and the storage for the content and character relationship data resulting from the story analysis of the proposed method may be on separate storage devices or on a single storage device or on the same storage device in separate partitions. The storage system of the proposed apparatus is a tangible and non-transitory computer readable medium.

The proposed method and apparatus would be particularly interesting at the creation stage since it would help writers during the creation process. However it would also be valuable when the content is consumed since the graphics generated could also be presented to viewers (for example on a second screen device or through an interactive application associated to the media) in order to enhance their user experience by helping them to understand the character relationship at a glance. Finally, the graphics generated could be presented on movie-related websites, DVD covers, etc. Cinema schools might also highly be interested by this feature for teaching purposes. A formalization of the relationship between characters could also be used in the automatic analysis of similarities between movies which is a growing area of interest for Video-On-Demand services that want to help the users navigate their catalog.

It is to be understood that the present invention may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method for performing story analysis, said method comprising:
accepting a story (1005);
detecting characters for each scene in said story (1105);
analyzing a relationship of each set of characters in said each scene of said story (1115);
determining an importance of each character in said each scene of said story (1115); and
determining an interaction characterization for said each character in said each scene of said story using said importance of said each character (1120).

2. The method according to claim 1, further comprising:
storing said story, a list of detected characters, said character relationships for said each said set of characters, and said interaction characterizations for said each character in a first data base;
generating graphs for said each character relationship for said each scene in said story; and
generating an interaction characterization graph for said each character.

3. The method according to claim 2, further comprising:
selecting which data from among said story, said list of detected characters, said character relationships for each said set of characters, and said interaction characterizations for each said character, said graphs for each said character relationship for said each scene in said story, and said interaction characterization graphs are to be displayed or exported; and
displaying or exporting said selected data.

4. The method according to claim 1, further comprising accepting input regarding all names used for a same character.

5. The method according to claim 1, wherein said analyzing step is accomplished by:
parsing, tagging and filtering words of dialog between said each set of characters to calculate a number of dialogs between each said set of characters and a number of words in each dialog between each said set of characters; and
determining a sentiment for each said dialog between each said set of characters.

6. The method according to claim 5, wherein said step of determining sentiment is accomplished using a dictionary.

7. The method according to claim 1, wherein said importance of each said character is determined by said number of words in said dialogs of each said character.

8. An apparatus for performing story analysis, comprising:
means for accepting a story;
means for detecting characters for each scene in said story;
means for analyzing a relationship of each set of characters in said each scene of said story;
means for determining an importance of each character in said each scene of said story; and
means for determining an interaction characterization for said each character in said each scene of said story using said importance of said each character.

9. The apparatus according to claim 8, further comprising:
means for storing said story, a list of detected characters, said character relationships for said each said set of characters, and said interaction characterizations for said each character in a first data base;
means for generating graphs for said each character relationship for said each scene in said story; and
means for generating an interaction characterization graph for said each character.

10. The apparatus according to claim 9, further comprising:
means for receiving input for selecting which data from among said story, said list of detected characters, said character relationships for each said set of characters, and said interaction characterizations for each said character, said graphs for each said character relationship for said each scene in said story, and said interaction characterization graphs are to be displayed or exported; and
means for displaying or exporting said selected data.

11. The apparatus according to claim 8, further comprising:
means for parsing, tagging and filtering words of dialog between said each set of characters to calculate a number of dialogs between each said set of characters and a number of words in each dialog between each said set of characters; and
means for determining a sentiment for each said dialog between each said set of characters.

12. The apparatus according to claim 11, wherein said sentiment is determined using a dictionary.

13. The apparatus according to claim 8, wherein said importance of each said character is determined by said number of words in said dialogs of each said character.
